Europäisches Patentamt

European Patent Office

Office européen des brevets

(11) Publication number: 0 288 887
A2

# (12) EUROPEAN PATENT APPLICATION

(21) Application number: 88106307.7

(22) Date of filing: 20.04.88

(51) Int. Cl.4: G01D 9/30

(30) Priority: 22.04.87 JP 97370/87

(43) Date of publication of application:
02.11.88 Bulletin 88/44

(84) Designated Contracting States:
DE FR GB

(71) Applicant: HITACHI, LTD.
6, Kanda Surugadai 4-chome Chiyoda-ku
Tokyo 100(JP)

(72) Inventor: Ishihara, Tamio
656, Tabiko
Katsuta-shi(JP)
Inventor: Nagumo, Ryoichi
1203-5, Kamitsubo Ichige
Katsuta-shi(JP)
Inventor: Sakamoto, Masami
2525-575, Mawatari
Katsuta-shi(JP)

(74) Representative: Altenburg, Udo, Dipl.-Phys. et
al
Patent- und Rechtsanwälte
Bardehle-Pagenberg-Dost-Altenburg
Frohwitter-Geissler & Partner Galileiplatz 1
Postfach 86 06 20
D-8000 München 86(DE)

## (54) Plotter.

(57) A plotter such as an X-Y recorder has a table structure having a recording paper mounting portion, a pen carriage carrying a plurality of recording pens and mounted for reciprocatory linear movement and having a pen mounting portion provided at its lower end with opening means for allowing recording pen tips to be projected therethrough when the recording pens are moved into contact with the paper for plotting, the recording pens being normally held at non-record position spaced from the paper. The plotter further has a pen selector movably carried by the pen carriage so as to be movable to a position corresponding to any one of the recording pens, the pen selector being movable to the position corresponding to a recording pen selected in accordance with a predetermined program for recording and to move the selected record pen to the recording position. The plotter further has a plurality of pen cap members provided at positions corresponding to the respective recording pens, the pen cap members being movable between closing positions where they close the portions of the opening means corresponding to the respective recording pens and opening positions where they open the portions of the opening means. The plotter further has a pen cap member actuator operatively connected to the pen selector and adapted for moving the pen cap member corresponding to the selected recording pen to the closing position when the pen selector has been moved to the position corresponding to the selected recording pen. FIG. I

X-Y

# PLOTTER

## BACKGROUND OF THE INVENTION

The present invention relates to a plotter and, more particularly, to a plotter having a pen carriage which carries a plurality of recording pens.

Various types of recording pens have been used for plotters, such as fiber-tip pens, drafting ink pens, ceramics-tip pens and ball-point pens. These known pens commonly suffer from a problem that, due to the fact that they make use of inks, the inks are dried when the pens are left uncapped for a long time, with the result that they cannot write at all.

Japanese Patent Utility Model Unexamined Publication No. 59-169645 discloses an arrangement in which a pen stocker serves also as a pen cap. According to this arrangement, since the pen stocker functions as a cap, the ink is prevented from being dried in recording pens which are not in use and, hence, which are in the pen stocker. This arrangement, however, is not intended for preventing drying of ink in a recording pen which is in use and carried by a pen carriage.

In the case where a pen carriage carries a plurality of recording pens, it is difficult to design and construct a suitable mechanism for capping these recording pens independently. Thus, no suitable capping method has been proposed for pen carriages of the type designed to carry a plurality of recording pens.

In a typical method of preventing drying of ink on such recording pens, the pen carriage is moved out of the path of the recording paper when the recording is not conducted, and a cap or caps are put on the pens carried by the carriage. This method, however, is still unsatisfactory in that since the recording pens on the carriage are not capped during the plotting, the pens on the carriage other than the pen which is plotting a record or a chart are exposed to the air, with the result that the inks held by these pens are dried. For instance, fiber pens and drafting ink pens tend to become scratchy when they are left uncapped for a period of 10 to 30 minutes. It is therefore desirable that the recording pens on the carriage other than the pen which is being used are capped even during the plotting.

## SUMMARY OF THE INVENTION

Accordingly, an object of the present invention is to provide a plotter in which recording pens on a carriage other than the recording pen which is being actually used are shielded from the ambient air so as to prevent inks in these recording pens from being dried, thereby to overcome the above-described problems of the prior art.

To this end, according to the present invention, there is provided a plotter comprising: a table structure having a recording paper mounting portion; a pen carriage mounted above the recording paper mounting portion of the table structure for reciprocatory linear movement and having a pen mounting portion provided at its lower end with opening means for allowing recording pen tips to be projected therethrough; recording pens held in the pen mounting portion of the pen carriage and movable between an upper non-recording position and a lower recording position, the recording pens being normally held at the non-recording position; a pen selector movably carried by the pen carriage so as to be movable to a position corresponding to any one of the recording pens, the pen selector being adapted to be moved to the position corresponding to a recording pen selected in accordance with a predetermined program for recording and to move the selected recording pen to the recording position; a plurality of pen cap members provided at positions corresponding to the respective recording pens, the pen cap members being movable between closing positions where they close the portions of the opening means corresponding to the respective recording pens and opening positions where they open the portions of the opening means; and a pen cap member actuating means operatively connected to the pen selector and adapted for moving the pen cap member corresponding to the selected recording pen to the closing position when the pen selector has been moved to the position corresponding to the selected recording pen.

Other objects, features and advantages of the present invention will become clear from the following description of the preferred embodiment when the same is read in conjunction with the accompanying drawings.

## BRIEF DESCRIPTION OF THE DRAWINGS

Fig. 1 is a fragmentary perspective view - schematically showing the whole of an embodiment of the plotter in accordance with the present invention;

Fig. 2 is an enlarged perspective view illustrating a portion of the plotter adjacent to a pen carriage;

Fig. 3 is a partial sectional view of a portion of the plotter as viewed from a lateral side on Fig. 2; and

Fig. 4 is a perspective view of the portion of the plotter shown in Fig. 2, as viewed in the direction of arrows IV-IV of Fig. 2.

## DESCRIPTION OF THE PREFERRED EMBODIMENT

An embodiment of the present invention will be described hereinunder with reference to the accompanying drawings.

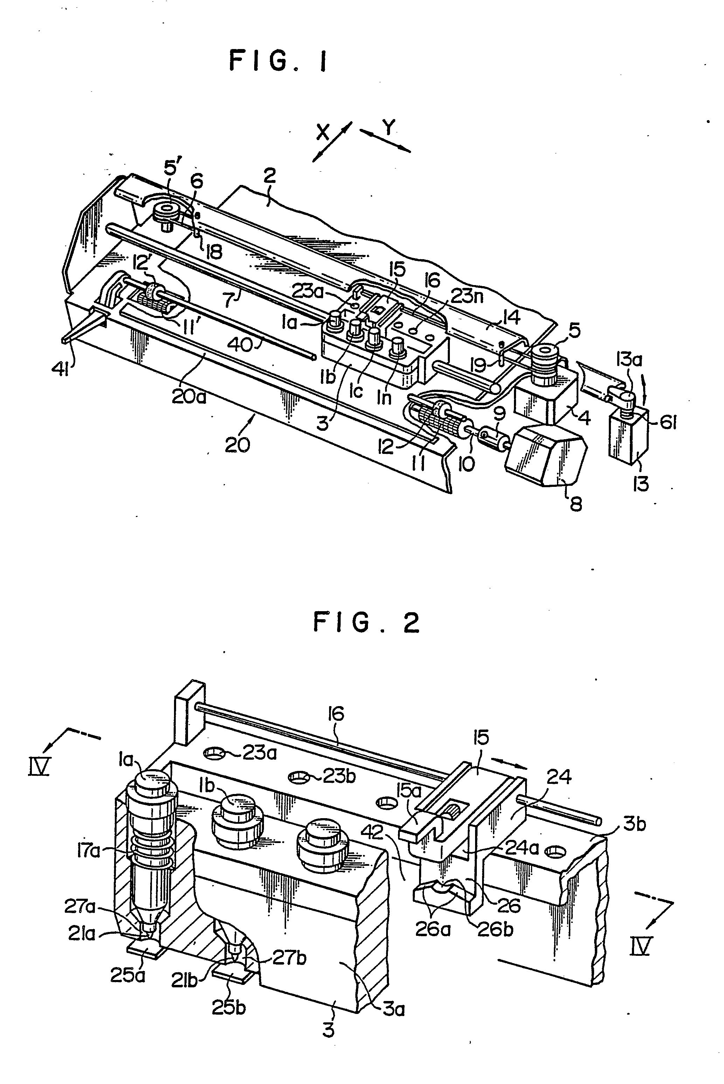

Fig. 1 shows an X-Y plotter which is connected to a computer and which is capable of drafting various patterns on a paper, upon receipt of information which is output from the computer in accordance with a predetermined program. A sheet of paper 2 is placed on a paper mounting portion of a table structure 20 or on a flat surface of an upper wall 20a of the table structure so as to move reciprocatorily in a direction which is referred to as X-axis direction. On the other hand, the recording pens are movable in a Y-axis direction which is orthogonal to the X-axis direction as viewed on a plane of the upper wall 20a or a recording surface of the paper. Thus, the pattern is drafted on the paper 2 as a locus of the relative movement between the paper 2 and the recording pens.

A plurality of recording pens 1a, 1b, 1c, ..., 1n, four pens in the illustrated case, are carried by a pen carriage 3 and are held in parallel with each one another and in a row which extends in the Y-axis direction. These pens are movable up and down substantially perpendicularly to the recording surface of the paper 2 which is adapted to be moved relatively to the recording pens. The pen carriage 3 is slidably mounted on a shaft 7 which is fixed to upper portions of the upper wall 20a of the table structure 20 and which extends in the Y-axis direction. A cable goes around a motor pulley 5 which projects upward from a pen driving motor 4 fixed to the table structure 20 and an idler pulley 5' which projects upward from the upper wall 20a of the table structure 20. A part of the cable 6 is connected to rear end portions of the pen carriage 3. In operation, the torque of the pen driving motor 4 causes the cable 6 to run through rotation of the motor pulley 5 and the idler pulley 5' so that the pen carriage 3 connected to the cable 6 is made to slide on the upper wall 20a of the table structure along the shaft 7.

Shafts 10 and 40 are connected to lower and upper portions of the upper wall 20a of the table structure 20, so as to extend in the Y-axis direction in parallel with each other. Metallic drive rollers 11, 11' are fixed to the shaft 10, while rubber rollers 12, 12' are carried by the shaft 40 in vertical alignment with the drive rollers 11, 11'. The shaft 10 is coupled through a coupling 9 at its one end to a paper feed drive motor 8 which is fixed to the table structure 20. The shaft 40 has a manual operation lever 41 fixed to one end thereof. The user can manipulate this lever 41 so as to swing the same up and down, thereby to move the rubber rollers 12, 12' on the shaft 40 into and out of contact with the drive rollers 11, 11'. When the drive rollers 11, 11' have been moved downward, the paper 2 on the upper wall 20a of the table structure 20 is pinched between the drive rollers 11, 11; and the rubber rollers 12, 12', so that the paper 2 is adapted to be reciprocatingly moved in the X-axis direction in response to the operation of the drive motor 8. Minute projections are formed on the surfaces of the drive rollers 11, 11 so as to prevent any slip between the surfaces of the paper 2 and the drive rollers 11, 11'.

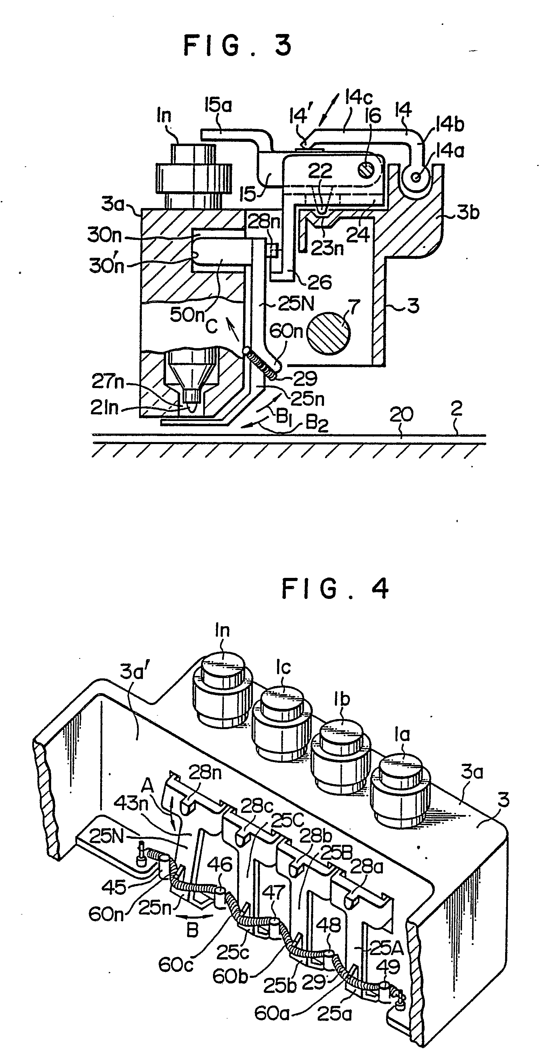

As will be clearly seen from Figs. 2 and 4, the pen carriage 3 has a front portion 3a and a rear portion 3b which are integral with each other and which oppose each other across a predetermined gap 42. The front portion 3a constitutes a pen mounting portion for mounting the above-mentioned recording pens 1a, 1b, ..., 1n. A shaft 16 which extends substantially in the Y-axis direction is fixed to an upper portion of the rear portion 3b of the pen carriage 3. A pen selector 15 has a rear portion which slidably and rotatably fits on the shaft 16. The pen selector 15 is slidable along the shaft 16 to any one of positions corresponding to the recording pens 1a, 1b, ..., 1n and can be temporarily fixed at such a position. The pen selector 15 has a forward projection 15a which projects forwardly therefrom to a position above the recording pen. As will be understood from Fig. 3, a lever 14 is provided above the upper wall 20a of the table structure 20. The lever 14 has a rising portion 14b rising from a lower end which is pivoted to the table structure 20 as at 14a, and a forward extension 14c which extends forwardly from the upper end of the rising portion 14b to a point above the pen selector 15. Thus, the lever 14 has a substantially L-like form composed of the rising portion 14b and the forward extension 14c. As will be seen from Fig. 1, one longitudinal end (end as viewed in the Y-axis direction) of the forward extension 14c is connected to an actuating portion 13a of a solenoid 13 which is fixed to the table structure 20.

As shown in Fig. 2, the recording pen 1a is upwardly urged by a spring 17a mounted on the pen carriage 3 so that the tip of the pen is held in the non-recording position which is spaced upward by a predetermined distance from the surface of the paper. Other recording pens 1b, 1c, ..., 1n also are urged upward to the non-recording positions by the forces of similar springs.

Referring to Fig. 1, the pen selector 15 is set at a position corresponding to the recording pen 1b. As the solenoid 13 is energixed in this state, the actuating portion 13a is lowered against the force of the spring 61. In consequence, the lever is swung counterclockwise about the pivot portion 14a so that the front end 14' of the lever 14 comes to press the pen selector 15. In consequence, the pen selector 15 is made to rotate counterclockwise around the shaft 16 so that the forward projection 15a presses the recording pen 1b downward against the force of the spring 17b (not shown but corresponds to the spring 17a shown in Fig. 2). In consequence, the recording pen 1b is lowered to the recording position. As will be explained later, the cover portion 25b is opened in this state so that the tip 21b of the recording pen 1b is allowed to contact the paper 2 thereby effecting the recording. Conversely, when the solenoid 13 is de-energized, the actuating portion 13a rises by the force of the spring 61 so that the lever 14 is rotated clockwise with the result that the spring 17b drives the pen selector 15 clockwise thereby raising the tip 21b of the recording pen 1b away from the paper 2.

As will be seen from Fig. 1, downward projections or pins 18, 19 are provided on the portions of the forward extension 14c of the lever 14 near both longitudinal ends thereof. When the pen carriage 3 has been moved together with the pen selector 15 along the shaft 7 to either end of the shaft 7, one of these pins 18, 19 contacts a later-mentioned cap selector 24. After this contact is attained, the cap selector 24 and the pen selector 15 are stationed so that they do not move when the pen carriage 3 is further moved. In consequence, a relative movement in the direction of the Y-axis direction is caused between the pen carriage 3 and the selector 15 so that the pen selector 15 is moved to the position corresponding to the desired recording pen.

For instance, assuming here that the pen carriage 3 has been moved to the left from the position of Fig. 1 to a position near the left end of the shaft 7, the cap selector 24 is brought into contact with the pin 18. However, a further movement of the pen carriage 3 to the left is not accompanied by the movement of the cap selector 24 and the pen selector 15 because the cap selector 24 and the pen selector 15 are stopped by the pin 18. This is allowed because the shaft 16 slides relative to the cap selector 24 and the pen selector 15. In consequence, the pen selector 15 is moved from the position corresponding to the recording pen 1b to a position corresponding to another recording pens 1c, ..., 1n. Similarly, when the pen carriage 3 is moved to the right from the position shown in Fig. 1 the pen selector 15 is moved from the position corresponding to the recording pen 1b to the position corresponding to the recording pen 1a.

The upper surface of the rear portion 3b of the pen carriage 3 is provided with holes 23a, ..., 23n corresponding to the recording pens 1a, ..., 1n, while pins 22 (see Fig. 3) project downward from a lower part of the pen selector 15. Therefore, when the pen selector 15 has been moved to a position corresponding to, for example, the recording pen 1a, the pin 22 fits in the hole 23a so that the pen selector 15 is stationed at the position corresponding to the recording pen 1a. When the pen selector 15 has been moved relative to the carriage 3 to the position corresponding to another recording pen, the pen 22 fits in the hole 23b, ..., 23n corresponding to such recording pen.

As will be understood from the foregoing description, the X-Y plotter of the described embodiment is capable of effecting a relative movement between the paper and the recording pen in an X-Y plane, selection of the recording pen and vertical movement of the recording pen, through the control of the pen drive motor 4, paper feed drive motor 8 and the solenoid 13 at proper timings, whereby a desired pattern is drafted on the paper. The illustrated embodiment of the plotter features a simple construction which is capable of preventing inks in the recording pens from being dried. This feature is described hereunder.

As has been described, the illustrated embodiment of the plotter in accordance with the invention has the cap selector 24. As will be clearly seen from Fig. 2, the cap selector 24 rotatably and slidably fits on the shaft 16. The pen selector 15 is disposed in a upwardly opening groove 24a provided in the cap selector 24. The cap selector 24 and the pen selector 15 are slidable as a unit along the shaft 16 and are rotatable about the shaft 16 independently of each other.

Referring to Figs. 2 and 4, cover members or pen cap members 25A, 25B, 25C, ..., 25N having cover portions or pen cap portions 25a, 25b, 25c, ..., 25n are provided on the rear wall 3a' of the pen mounting front portion 3a of the carriage 3 at positions corresponding to the recording pens 1a, 1b, 1c, ..., 1n. The pen cap members and other associated members have similar constructions so that the pen cap member 25N will be described as a representative, unless other cap member or members are to be specifically mentioned. In the drawings, the parts associated with the respective pen cap members 25A, 25B, ..., 25N are denoted by numerals having suffixes a, b, c, ..., n.

The pen cap member 25N includes a vertically extending lever member 43n which is provided at its upper end with a rearward projection 28n and a forward projection 50n (see Fig. 3). The cover portion 25n is provided at the lower end of the lever member. The projection 50n is received in a hole 30n which is formed in the rear wall 3a' of the pen mounting portion 3a of the pen carriage 3. The cover portion 25n is constituted by a tabular or plate portion which extends forwardly from the lower end of the lever member 43n. When the pen cap member 25N is located at the position of Fig. 3, the cover portion 25n covers the lower end of an opening or pen tip guide hole 27n through which the pen tip is to be projected, thus preventing ink in the recording pen from being dried.

The pen cap members 25A, 25B, 25C, ..., 25N are pressed against and secured to the rear wall 3a' of the pen mounting portion 3a of the pen carriage 3 by means of a spring 29 which is stretched in a zig-zag form by means of pins 45, 46, 47, 48 and 49 projected from the rear wall 3a'. This spring 29 is positioned at a lower level of the pen cap members 25A, 25B, ..., 25N and engages with the lower edges of projections 60a, 60b, ..., 60n on lower portions of the respective pen cap members, thereby urging these pen cap members obliquely upwardly. For instance, referring specifically to the pen cap member 25N, the spring 29 serves to urge the pen cap member 25N towards the area where the projection 50n contacts the bottom surface 30n' of the hole 30n, as shown by an arrow C in Fig. 3. As a result, the projection 50 is pressed against the bottom surface 30n' of the hole 30n by the force of the spring 29, so that the pen cap member 25N becomes vertically rockable about the point of contact between the projection 50n and the bottom surface 30n' of the hole 30n, as indicated by arrows A and B in Fig. 4. When the pen cap member 25N is held in the closing position as shown in Fig. 3, the cover portion 25n is urged obliquely upward by the force of the spring 29, thereby to firmly close the pen projecting opening or pen tip guide hole 27n.

As shown in Figs. 2 and 3, the cap selector 24 is provided on the front end thereof with a tabular portion 26 which extends downward through the gap 42 and facing the rear wall 3a' (see Fig. 4). The lower portion of the tabular portion 26 is bent to project forwardly, thus providing an L-shaped form. Slant surfaces 26a facing upward are provided on the forward projection of the tabular portion 26 such as to convex upward from both lateral edges of the forward projection. An upwardly directed arcuate recess 26b is formed between both slant surfaces 26a. The slant surfaces 26a and the recess 26b are substantially at the same level as the projections 28a, ..., 28n of the pen cap members 25A, ..., 25N. As will be clearly understood from the following description, the slant surfaces 26a and the recess 26b constitute a pen cap actuating portion for actuating the pen cap member. The projections 28a...28n serve as engaging portions engageable with the pen cap member actuating portion.

The X-Y plotter of the illustrated embodiment, having the construction explained hereinbefore, operates in a manner which will be described hereinunder.

Fig. 1 illustrates the plotter in a state in which the recording pen 1b is selected by the pen selector 15. To select another recording pen 1n from this state, the plotter operates to move the pen carriage 3 to the left as viewed in Fig. 1. As the pen carriage 3 approaches the left end, the cap selector 24 contacts the pin 18 so that the cap selector 24 and the pen selector 15 are stationed. The pen carriage 3 is further moved to the left so that a relative movement is caused between the pen carriage 3 and the assembly of the cap selector 24 and the pen selector 15, so that the pen selector 15 approaches the position corresponding to the recording pen 1n, in a manner which was described before.

As described before, when the pen selector 15 has approached the recording pen 1n, one of the slant surfaces 26a of the tabular portion 26 of the cap selector 24 comes into engagement with the lower portion of the projection 28n of the pen cap member 25N. In consequence, the pen cap member 25N rotates in the direction of an arrow $B_1$ (see Fig. 3) about a fulcrum constituted by the area of contact between the projection 28n and the bottom surface 30n' of the hole 30n. As a result, the pen cap member 25N is moved to an open position where its cover portion 25n does not cover the pen tip guide hole 27n through which the pen tip is to be projected. The leftward movement of the pen carriage 3 as viewed in Fig. 1 is ceased when it has reached a position corresponding to the recording pen 1n. In this state, the projection 28n is made to engage with the recess 26b and is pressed against the bottom surface of the recess 26 by the force of the spring 29, whereby the pen cap member 25N is set at the open position. Thus, the pen selector 15 is moved to the position corresponding to the recording pen 1n while the pen cap member 25N is opened, so that the recording pen 1n becomes ready for use. In this state, the pen cap members 25A, 25B, ---of other recording pens are set at the respective closing positions.

When it is desired to select a recording pen 1a after the selection of the recording pen 1n, the pen carriage 3 is moved to the right as viewed in Fig. 1. As a result of the rightward movement of the pen carriage 3, the recess 26b comes out of the projection 28n so that the tabular portion 26 is moved away from the projection 28. Consequently, the pen cap member 25N is swung in the direction of an arrow $B_2$ by the force of the spring 29 to the closing position where the cover portion 25n thereof closes the pen tip guide hole 27n. The pen carriage 3 is allowed to move to the right by a predetermined amount even after the cap selector 24 is stationed upon contact with the pin 19. In response to this movement, the pen selector 15 is moved to the position of the recording pen 1a so that the pen cap member 25A is moved to the opening position.

When none of the recording pens is used, the pen carriage 3 is moved to the left or right by an amount greater than a predetermined amount, so as to bring the pen selector 15 and the cap selector 24 to a position on the pen carriage 3 where there is no recording pen. In this state, all the recording pens which are not used are covered by the cover portions 25a, 25b, ..., 25n, whereby the recording pens are prevented from becoming dry. Preferably, the plotter is so designed that the state in which all the recording pens are covered is automatically obtained whenever the recording operation is interrupted or suspended for a predetermined period.

As will be clearly understood from the foregoing description, only the recording pen which is under recording operation or used is exposed to the ambient air in the illustrated embodiment, while all other recording pens are insulated from the ambient air, so that the drying of the inks in the recording pens can effectively be prevented. The opening and closing action of the pen cap members, i.e., the movement of the pen cap members between the open position and the closing position, is effected in an interlocked relation to the pen selecting operation of the pen selector, thus eliminating the necessity for a specific actuator such as a motor for effecting the opening and closing action.

Preferably, the slant surfaces 26a and the recess 26b of the tabular portion 26 and the projections 28a, 28b, ..., 28n are made from a material having small coefficient of friction such as a synthetic resin having a smooth surface. Preferably, the slant surfaces 6a have a small gradient so that the opening and closing of the pen cap member may be effected with a small force. For the purpose of further smoothing the opening and closing action, the projections 28a, 28b, ..., 28n may be constituted by rotatable members such as rollers.

In the illustrated embodiment, slant surfaces 26a and a recess 26b are formed on the tabular portion 26 for cooperation with the projections 28a, 28b, ..., 28n of the pen cap members 25A, 25B, ..., 25N. This arrangement, however, may be modified such that slant surfaces and a recess similar to those 26a, 26b in the described embodiment are provided on each pen cap member for cooperation with projections similar to those of the described embodiment and provided on the tabular portion. In the illustrated embodiment, the movement of the pen cap members to the closing position is effected by rotating the cap members clockwise (direction of arrow $B_2$ in Fig. 3), while the movement of the same to the opening position is effected by rotating the same counterclockwise (direction of arrow $B_1$). The arrangement, however, may be such that the cap members are swung in the direction perpendicular to the plane of the sheet of the drawing of Fig. 3. The arrangement may be such that the parts such as the lever 14, shaft 16, cap selector 24, pen selector 15, tabular portion 26, pen cap members 25A to 25N and the spring 29 are arranged on the left side of the front portion 3a of the pen carriage 3 as viewed in Fig. 3, in symmetry with the illustrated parts with respect to the front portion 3a. In such a case, the counterclockwise rotation of the pen caps bring them to the closing position, while the clockwise rotation brings the same to the opening positions. Various designs and constructions of the pen cap members are adoptable provided that each pen cap member is held in the opening position when the corresponding recording pen has been selected by the pen selector 15 and in the closing position when the corresponding recording pen has not been selected by the pen selector.

In the illustrated embodiment, when the pen selector selects the recording pen 1n, the pin 28n of the pen cap member 25N engages with the recess 26b in the tabular portion 26 of the cap selector 24 so as to hold the pen cap member 25N in the open position. The arrangement for allowing the mutual engagement between the pin 28n of the pen cap member 25N and the recess 26b of the cap selector 24 provides an additional advantage that the pen selector 15 is securely located at the position where it selects the recording pen 1n.

As will be realized from the foregoing description, according to the present invention, it is possible to obtain a plotter in which the recording pens other than the recording pen under operation are isolated from the ambient air by a simple construction so as to effectively prevent the drying of the inks in these recording pens.

## Claims

1. A plotter comprising:

a table structure having a recording paper mounting portion;

a pen carriage mounted above the recording paper mounting portion of said table structure for reciprocatory linear movement and having a pen mounting portion provided at its lower end with opening means for allowing recording pen tips to be projected therethrough;

recording pens held in the pen mounting portion of said pen carriage and movable between an upper non-recording position and a lower recording position, said recording pens being normally held at said non-recording position;

a pen selector movably carried by said pen carriage so as to be movable to a position corresponding to any one of said recording pens, said pen selector being adapted to be moved to the position corresponding to a recording pen selected in accordance with a predetermined program for recording and to move the selected recording pen to the recording position;

a plurality of pen cap members provided at positions corresponding to the respective recording pens, said pen cap members being movable between closing positions where they close the portions of said opening means corresponding to the respective recording pens and opening positions where they open said portions of said opening means; and

a pen cap member actuating means operatively connected to said pen selector and adapted for moving the pen cap member corresponding to said selected recording pen to said closing position when said pen selector has been moved to the position corresponding to said selected recording pen.

2. A plotter according to Claim 1, wherein said pen cap member actuating means includes a cap selector reciprocatable on said carriage together with said pen selector and having a pen cap member actuating portion, while said pen cap member has an engaging portion engageable with said pen cap member actuating portion, and wherein, when said cap selector together with said pen selector has been moved to the position corresponding to said selected recording pen, the pen cap member actuating portion engages with the engaging portion of said pen cap member corresponding to said selected recording pen thereby bringing the pen cap member to the opening position.

3. A plotter according to Claim 2, wherein each said pen cap member has a vertically extending lever member secured pivotally at tis upper end to said pen carriage and provided at its lower end with a cover plate portion, each said lever member being movable between a closing position where said cover plate portion covers said opening means and an opening position where said cover plate portion does not cover said opening means, said lever members being normally urged to said closing position by the force of a spring, and wherein said engaging portion of each said pen cap member includes a projection projecting from said lever member, and said pen cap member actuating portion includes upwardly facing slant surface means which, when said cap selector is moved together with said pen selector to the position corresponding to said selected recording pen, engages with the underside of said projection of said lever member corresponding to said recording pen so as to progressively push said lever member to rotate said lever member towards said opening position against the force of said spring, and an upwardly opening recess for engaging with said projection when said lever member has reached said opening position.

# FIG. 1

# FIG. 2

0 288 887

# FIG. 3

# FIG. 4